# EUROPEAN PATENT APPLICATION

(11) **EP 4 582 167 A1**
(43) Date of publication of application: **09.07.2025**
(21) Application number: 23860330.2
(22) Date of filing: 29.08.2023
(51) Int. Cl.: B01D 53/04, C01B 32/50

(54) **ACIDIC GAS RECOVERY SYSTEM**

(30) Priority: 01.09.2022 JP 2022139539
(71) Applicant: NGK Insulators, Ltd., Nagoya-shi, Aichi 467-8530 (JP)
(72) Inventor: ANDO, Junichi, Nagoya-shi, Aichi 467-8530 (JP); TAKAHASHI, Michio, Nagoya-shi, Aichi 467-8530 (JP); OKUMA, Yusuke, Nagoya-shi, Aichi 467-8530 (JP); KAN, Hirofumi, Nagoya-shi, Aichi 467-8530 (JP); SHIBAGAKI, Yukinari, Nagoya-shi, Aichi 467-8530 (JP)
(74) Representative: MERH-IP Matias Erny Reichl Hoffmann Patentanwälte PartG mbB
(86) International application number: PCT/JP2023/031181
(87) International publication number: WO 2024/048568

(57) **Abstract**

Provided is an acid gas capture system that enables improvement in adsorption amount of an acid gas and suppression in deterioration of an acid gas adsorption material. An acid gas capture system according to an embodiment of the present invention includes: a plurality of acid gas adsorption devices each including an acid gas adsorption material; and a fluid supply line. The fluid supply line allows distribution and supply of a fluid to the plurality of acid gas adsorption devices. The fluid supply line includes a branching portion and a plurality of flow dividing portions. The plurality of flow dividing portions each connect the branching portion and each of the plurality of acid gas adsorption devices to each other. A resistor is provided to each of the plurality of flow dividing portions.

## Description

### Technical Field

The present invention relates to an acid gas capture system.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed a gas separation unit including adsorption material layers filled with pellet-like carbon dioxide adsorption materials (see, for example, Patent Literature 1). In the gas separation unit, the pellet-like carbon dioxide adsorption materials adsorb CO₂ from a gas fluid passing through the adsorption material layers at a predetermined adsorption temperature, and, when heated to a desorption temperature exceeding the adsorption temperature, desorb the adsorbed CO₂. In order to inexpensively provide a CO₂ capture system, it is conceivable to reduce the number of CO₂ supply fans to be installed and supply a desorption gas to a plurality of CO₂ adsorption devices in a distributed manner. However, the plurality of CO₂ adsorption devices may have flow passage resistances (pressure losses) different from each other. In this case, in a desorption step, the flow rate of the desorption gas to the CO₂ adsorption device with a relatively small flow passage resistance becomes relatively larger, and the flow rate of the desorption gas to the CO₂ adsorption device with a relatively large flow passage resistance becomes relatively smaller. Then, a temperature variation occurs between the plurality of CO₂ adsorption devices in accordance with the flow rates of the desorption gas. As a result, the temperature of the CO₂ adsorption device with a relatively small flow passage resistance may excessively rise. When the temperature of the CO₂ adsorption device excessively rises, deterioration is caused due to the volatilization and the pyrolysis of a CO₂ adsorption material, or the like, resulting in a reduction in adsorption capacity for CO₂. Further, in the CO₂ adsorption device with a relatively large flow passage resistance, a temperature is low, and does not reach a temperature required for CO₂ release. Thus, there arises a problem in that the adsorption capacity for CO₂ is reduced.

### Citation List

### Patent Literature

[PTL 1] WO 2014/170184 A1

### Summary of Invention

### Technical Problem

A primary object of the present invention is to provide an acid gas capture system that enables improvement in adsorption amount of an acid gas and suppression of deterioration in acid gas adsorption material.

### Solution to Problem

[1] According to an embodiment of the present invention, there is provided an acid gas capture system including a plurality of acid gas adsorption devices and a fluid supply line. Each of the plurality of acid gas adsorption devices includes an acid gas adsorption material. The fluid supply line allows distribution and supply of a fluid to the plurality of acid gas adsorption devices. The fluid supply line includes a branching portion and a plurality of flow dividing portions. The plurality of flow dividing portions connect the branching portion and the plurality of acid gas adsorption devices to each other, respectively. A resistor is provided to each of the plurality of flow dividing portions.
[2] In the acid gas capture system according to the above-mentioned item [1], the acid gas may be carbon dioxide.
[3] In the acid gas capture system according to the above-mentioned item [1] or [2], an adsorption step of causing an acid gas to be adsorbed to the acid gas adsorption materials by supplying a gas to be treated containing the acid gas to the plurality of acid gas adsorption devices; and a desorption step of causing the acid gas to be desorbed from the acid gas adsorption material by heating the plurality of acid gas adsorption devices and supplying a desorption gas to the plurality of acid gas adsorption devices may be practicable. In the desorption step, a flow passage resistance of each of the resistors may be larger than a flow passage resistance of each of the plurality of acid gas adsorption devices.
[4] In the acid gas capture system according to the above-mentioned item [3], each of the resistors may be capable of changing the flow passage resistance. In the adsorption step, the flow passage resistance of each of the resistors is smaller than the flow passage resistance of each of the plurality of acid gas adsorption devices.
[5] The acid gas capture system described according to the above-mentioned item [4] may further include a control part. The control part is capable of controlling the flow passage resistances of the resistors.
[6] The acid gas capture system according to any one of the above-mentioned items [3] to [5] may further include bypass lines, each enabling the resistor to be bypassed.

### Advantageous Effects of Invention

According to embodiments of the present invention, the acid gas capture system that enables improvement in adsorption amount of an acid gas and suppression of deterioration in acid gas adsorption material can be achieved.

### Brief Description of Drawings

FIG. **1** is a schematic configuration diagram of an acid gas capture system according to one embodiment of the present invention.
FIG. **2** is a schematic configuration view of an acid gas adsorption device according to an embodiment in the acid gas capture system of FIG. **1****.**
FIG. **3** is a schematic perspective view of an acid gas adsorption device according to another embodiment in the acid gas capture system of FIG. **1****.**
FIG. **4** is a schematic sectional view of the acid gas adsorption device of FIG. **3****.**
FIG. **5** is a schematic configuration diagram of an acid gas capture system according to another embodiment of the present invention.

### Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present invention.

### A. Overview of Acid Gas Capture System

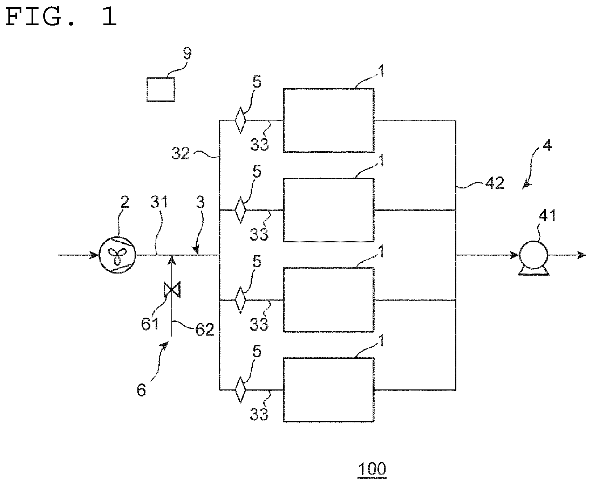

FIG. **1** is a schematic configuration diagram of an acid gas capture system according to one embodiment of the present invention.

An acid gas capture system **100** of the illustrated example includes a plurality of acid gas adsorption devices **1** and a fluid supply line **3.** Each of the plurality of acid gas adsorption devices **1** includes an acid gas adsorption material. The fluid supply line **3** allows distribution and supply of a fluid to the plurality of acid gas adsorption devices **1.** The fluid supply line **3** includes a branching portion **32** and a plurality of flow dividing portions **33.** The plurality of flow dividing portions **33** connect the branching portion **32** and the plurality of acid gas adsorption devices **1** to each other, respectively. A resistor **5** is provided to each of the plurality of flow dividing portions **33.**

In the acid gas capture system **100,** an adsorption step and a desorption step can be typically performed. Although described later in detail, in the adsorption step, a gas to be treated containing an acid gas is supplied to the plurality of acid gas adsorption devices **1** so that the acid gas is adsorbed to the acid gas adsorption materials. In a desorption step, the plurality of acid gas adsorption devices **1** are heated to desorb the acid gas from the acid gas adsorption materials, and a desorption gas is supplied to the plurality of acid gas adsorption devices **1.**

According to one embodiment of the present invention, the plurality of acid gas adsorption devices **1** are connected to the fluid supply line **3** so as to be parallel to each other. In the adsorption step, the fluid supply line **3** allows the distribution and the supply of the gas to be treated to the plurality of acid gas adsorption devices **1.** As a result, the acid gas can be adsorbed to the acid gas adsorption materials of the plurality of acid gas adsorption devices at one time. Thus, the number of acid gas supply fans to be installed can be decreased, and hence the acid gas capture system can be inexpensively provided. Further, in the desorption step, the plurality of acid gas adsorption devices **1** are heated, and the desorption gas is distributed and supplied through the fluid supply line **3** to the plurality of acid gas adsorption devices **1.**

However, the plurality of acid gas adsorption devices may have flow passage resistances (pressure losses) different from each other. In this case, in the desorption step, the flow rate of the desorption gas to the acid gas adsorption device with a relatively small flow passage resistance becomes relatively larger, and the flow rate of the desorption gas to the acid gas adsorption device with a relatively large flow passage resistance becomes relatively smaller. Then, a temperature variation occurs between the plurality of acid gas adsorption devices in accordance with the flow rates of desorption gas. As a result, the temperature of the acid gas adsorption device with a relatively small flow passage resistance may excessively rise. When the temperature of the acid gas adsorption device excessively rises, deterioration is caused due to the volatilization and the pyrolysis of an acid gas adsorption material, or the like, resulting in a reduction in adsorption capacity for an acid gas. Further, in the acid gas adsorption device with a relatively large flow passage resistance, a temperature is low, and does not reach a temperature required for acid gas release. Thus, there arises a problem in that the adsorption capacity for an acid gas is reduced.

In this regard, in one embodiment of the present invention, the resistor **5** is provided to the flow dividing portion **33** that connects the branching portion **32** and each of the acid gas adsorption devices **1** to each other. Thus, the flow rate of the desorption gas flowing through each of the acid gas adsorption devices **1** depends on the flow passage resistance of the resistor **5** rather than on the flow passage resistance (pressure loss) of each of the plurality of acid gas adsorption devices **1.** As a result, in the desorption step, the flow rates of the desorption gases flowing through the acid gas adsorption devices **1** can be made equal to each other. Thus, an excessive rise in temperature of each of the acid gas adsorption devices **1,** and in turn, the deterioration in acid gas adsorption materials can be suppressed.

In one embodiment, the flow passage resistance of the resistor **5** in the desorption step is larger than the flow passage resistance of each of the plurality of acid gas adsorption devices **1.** The flow passage resistance of the resistor **5** in the desorption step is, for example, 0.001 kPaG (gauge pressure) or more, preferably 0.1 kPaG or more, and is, for example, 5 kPaG or less, preferably 1 kPaG or less. The flow passage resistances are pressure loss resistances, and can be measured by, for example, a pressure differential gauge installed on the front and rear sides of the resistor and a pressure differential gauge installed on the front and rear sides of the acid gas adsorption device, respectively. A difference in flow passage resistance between the resistor **5** and the acid gas adsorption device **1** is, for example, 0.01 kPaG (gauge pressure) or more, preferably 0.1 kPaG or more, and is, for example, 4.5 kPaG or less, preferably 0.9 kPaG or less.

When the flow passage resistance of the resistor and/or the difference in flow passage resistance between the resistor and the acid gas adsorption device in the desorption step is equal to or more than the above-mentioned lower limit, an influence of the flow passage resistance of the acid gas adsorption device on the flow rate of the desorption gas can be stably suppressed. When the flow passage resistance of the resistor and/or the difference in flow passage resistance between the resistor and the acid gas adsorption device in the desorption step is equal to or less than the above-mentioned upper limit, the desorption gas can be supplied to the acid gas adsorption devices within an energetically practicable range in the desorption step.

In the desorption step, the friction loss coefficient of the resistor **5** through which the desorption gas passes is, for example, from 0.020 to 2.000, preferably from 0.023 to 1.500. The friction loss coefficient is typically obtained from the Colebrook equation or the Moody chart.

In the desorption step, the friction loss coefficient of the acid gas adsorption device **1** through which the desorption gas passes is, for example, from 0.010 to 0.500, preferably from 0.015 to 0.350.

In one embodiment, the resistor **5** can change the flow passage resistance. A lower flow passage resistance of the resistor **5** in the adsorption step is more preferred, and the flow passage resistance of the resistor **5** in the adsorption step is typically smaller than that in the desorption step. The flow passage resistance of the resistor **5** in the adsorption step is, for example, 20 kPaG (gauge pressure) or less, preferably 1 kPaG or less, more preferably 0.1 kPaG or less, still more preferably 0.08 kPaG or less, particularly preferably 0.0008 kPaG or less. When the flow passage resistance of the resistor in the adsorption step is equal to or less than the above-mentioned upper limit, the gas to be treated can be efficiently supplied to the acid gas adsorption devices in the adsorption step. The lower limit of the flow passage resistance of the resistor in the adsorption step is, for example, 0.0001 kPaG or more, and is, for example, 0.01 kPaG or more.

In one embodiment, the flow passage resistance of the resistor 5 in the adsorption step is smaller than the flow passage resistance of each of the plurality of acid gas adsorption devices 1. Thus, the gas to be treated can be more efficiently supplied to the acid gas adsorption devices.

In the adsorption step, the friction loss coefficient of the resistor **5** through which the gas to be treated passes is, for example, from 0.010 to 0.050, preferably from 0.015 to 0.045.

In the adsorption step, the friction loss coefficient of the acid gas adsorption device **1** through which the gas to be treated passes is, for example, from 0.010 to 0.050, preferably from 0.013 to 0.045.

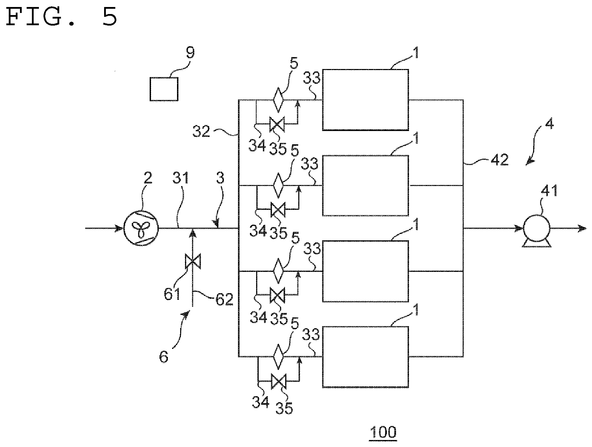

Further, as illustrated in FIG. **5****,** the acid gas capture system **100** may further include bypass lines **34,** each bypassing the resistor **5.** With this configuration, when a flow passage is switched, the resistor **5** can be bypassed. Thus, in the adsorption step, the gas to be treated can be efficiently supplied to each of the acid gas adsorption devices via the bypass line. In this case, the flow passage resistance (pressure loss) of the resistor **5** may be constant through the adsorption step and the desorption step. When the flow passage resistance of the resistor **5** is constant, the range thereof is, for example, the same as the above-mentioned range of the flow passage resistance of the resistor **5** in the desorption step described above.

Examples of the acid gas contained in the gas to be treated include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the gas to be treated is a CO₂-containing gas. The CO₂-containing gas may contain nitrogen in addition to CO₂. The CO₂-containing gas is typically air (atmosphere) . A concentration of CO₂ in the CO₂-containing gas is, for example, 100 ppm (on a volume basis) or more and 2 vol% or less.

Now, description is given in detail of a case in which the acid gas is carbon dioxide (CO₂).

### B. Details of Acid Gas Capture System

Next, with reference to FIG. **1****,** the details of the acid gas capture system **100** are described.

The acid gas capture system **100** of the illustrated example includes an acid gas supply fan **2,** a desorption gas supply unit **6,** and a capture unit **4** in addition to the plurality of acid gas adsorption devices **1,** the fluid supply line **3,** and the plurality of resistors **5,** which have been described above. When the gas to be treated by the acid gas adsorption devices is a CO₂-containing gas, the acid gas adsorption devices **1** are carbon dioxide adsorption devices **1a.**

The acid gas capture system **100** of the illustrated example includes four acid gas adsorption devices **1.** However, the number of acid gas adsorption devices **1** is not limited to four. The number of acid gas adsorption devices **1** is, for example, 2 or more, preferably 4 or more, and is, for example, 10 or less.

### B-1. Acid Gas Adsorption Device of First Embodiment

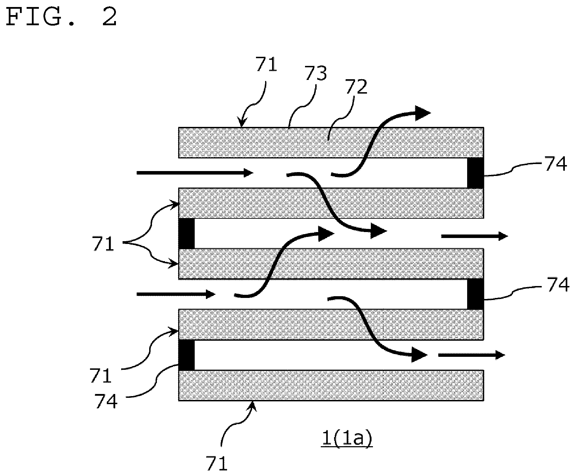

As illustrated in FIG. **2****,** in one embodiment, the acid gas adsorption device **1** includes a plurality of adsorption material layers **71.**

The plurality of adsorption material layers **71** are stacked in a thickness direction thereof so as to be spaced apart from each other. In the illustrated example, five adsorption material layers **71** are arranged in parallel. However, the number of adsorption material layers **71** is not limited thereto. The number of adsorption material layers **71** is, for example, 5 or more, preferably 10 or more, more preferably 20 or more. A distance between adjacent adsorption material layers **71** among the plurality of adsorption material layers **71** is, for example, 0.5 cm or more and 1.5 cm or less.

Each of the plurality of adsorption material layers **71** includes a flexible fiber member **73** and a plurality of pellet-like adsorption materials **72.**

The flexible fiber member **73** permits passage of gas and restricts passage of the pellet-like adsorption materials. The flexible fiber member **73** is typically formed in a hollow shape (bag shape) that allows the plurality of pellet-like adsorption materials **72** to be contained therein. The flexible fiber member **73** may be a fabric or a non-woven fabric. Examples of a material for the flexible fiber member **73** include organic fibers and natural fibers, preferably, a polyethylene terephthalate fiber, a polyethylene fiber, and a cellulosic fiber. A thickness of the flexible fiber member **73** is, for example, 25 µm or more and 500 µm or less.

The plurality of pellet-like adsorption materials **72** are filled in the flexible fiber member **73** having a hollow shape (bag shape). The pellet-like adsorption material **72** serves as an acid gas adsorption material, and typically serves as a carbon dioxide adsorption material. Examples of a material for the pellet-like adsorption material **72** include an amine-modified material, preferably amine-modified cellulose, more preferably amine-modified nanofibrillated cellulose. A mean primary particle diameter of the pellet-like adsorption material **72** is, for example, 60 µm or more and 1,200 µm or less. Any appropriate value may be used as a filling ratio of the pellet-like adsorption materials **72** in the adsorption material layer **71.**

The acid gas adsorption device **1** of the illustrated example further includes a plurality of spacers **74.** The spacer **74** is located between adjacent adsorption material layers **71** among the plurality of adsorption material layers **71.** This configuration allows a distance between adjacent adsorption material layers among the adsorption material layers to be stably ensured. In one embodiment, the plurality of adsorption material layers **71** and the plurality of spacers **74** are arranged in a substantially zig-zag pattern when viewed from a direction (depth direction on the drawing sheet of FIG. **1**) orthogonal to the thickness direction of the adsorption material layers **71.**

As the acid gas adsorption device **1** as described above, there is, for example, a gas separation unit as described in WO 2014/170184 A1. The publication is incorporated herein in its entirety by reference.

### B-2. Acid Gas Adsorption Device of Second Embodiment

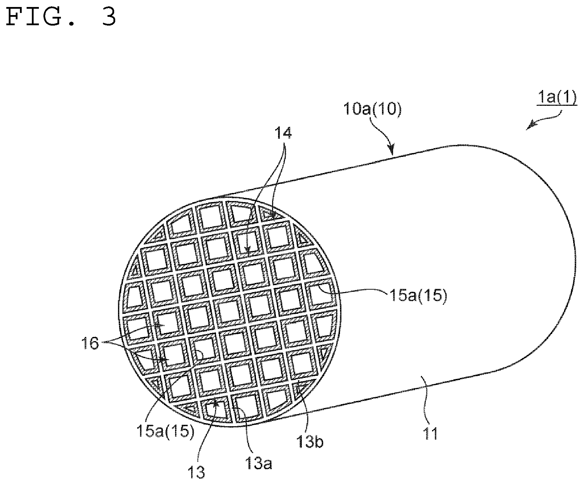

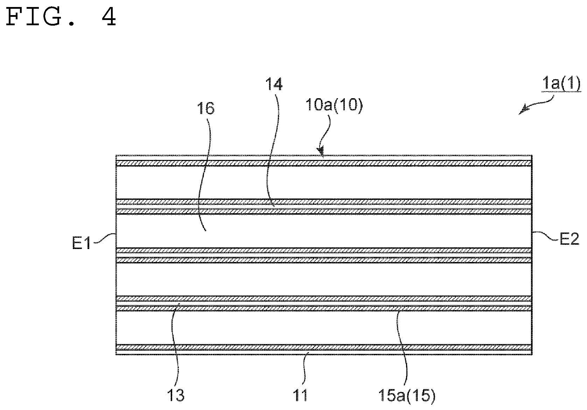

As illustrated in FIG. **3** and FIG. **4****,** in another embodiment, an acid gas adsorption device **1** includes a base material **10** and acid gas adsorption layers **15.**

The structure of the base material **10** is not particularly limited, and is, for example, a honeycomb-like structure, a filter structure such as a filtration cloth, or a pellet structure. The acid gas adsorption layer **15** is not particularly limited as long as the layer is arranged on the surface of any such base material **10.**

### B-2-1. Base Material (Honeycomb-like Base Material)

In one embodiment, the base material **10** is a honeycomb-like base material **10a.** The honeycomb-like base material **10a** includes partition walls **13** that define a plurality of cells **14.**

The cells **14** each extend from a first end surface **E1** (inflow end surface) of the honeycomb-like base material **10a** to a second end surface **E2** (outflow end surface) thereof in the lengthwise direction (axial direction) of the honeycomb-like base material **10a** (see FIG. **4**). The cells **14** each have any appropriate shape in a cross section in a direction perpendicular to the lengthwise direction of the honeycomb-like base material **10a.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **14** per unit area) may be appropriately set in accordance with purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **10a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **10a** of the illustrated example has a cylindrical shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **10a** typically includes: an outer peripheral wall **11;** and a partition wall **13** positioned inside the outer peripheral wall **11.** In the illustrated example, the outer peripheral wall **11** and the partition wall **13** are integrally formed. The outer peripheral wall **11** and the partition wall **13** may be separate bodies.

The outer peripheral wall **11** has a cylindrical shape. The thickness of the outer peripheral wall **11** may be set to any appropriate thickness. The thickness of the outer peripheral wall **11** is, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a quadrangle except for a portion in which the first partition wall **13a** and the second partition wall **13b** are each brought into contact with the outer peripheral wall **11.** The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set in accordance with the applications of the honeycomb-like base material. The thickness of the partition wall **13** is typically smaller than the thickness of the outer peripheral wall **11.** The thickness of the partition wall **13** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **13** may be appropriately set in accordance with purposes. The porosity of the partition wall **13** is, for example, 15% or more, preferably 20% or more, and is, for example, 70% or less, preferably 45% or less. The porosity may be measured, for example, by mercury porosimetry.

The bulk density of the partition wall **13** may be appropriately set in accordance with purposes. The density is, for example, 0.10 g/cm³ or more, preferably 0.20 g/cm³ or more, and is, for example, 0.60 g/cm³ or less, preferably 0.50 g/cm³ or less. The bulk density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **10a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **10a** is produced. When the firing is adopted, the body is fired at, for example, from 1,200°C to 1,500°C. A firing time period is, for example, 1 hour or more and 20 hours or less.

### B-2-2. Acid Gas Adsorption Layer (Carbon Dioxide Adsorption Layer)

In one embodiment, the acid gas adsorption layer **15** is formed on the surface of the partition wall **13.** In the honeycomb-like base material **10a,** a gas flow passage **16** is formed in a portion (typically, a center portion) in a cross section of the cell **14** in which the acid gas adsorption layer **15** is not formed. The acid gas adsorption layer **15** may be formed on the entire inner surface of the partition wall **13** (specifically, so as to surround the gas flow passage **16**) as in the illustrated example, or may be formed on part of the surface of the partition wall. When the acid gas adsorption layer **15** is formed on the entire inner surface of the partition wall **13,** acid gas (typically, CO₂) removal efficiency can be improved.

The gas flow passage **16** extends from the first end surface **E1** (inflow end surface) to the second end surface **E2** (outflow end surface) as with the cells **14.** Examples of the sectional shape of the gas flow passage **16** include the same sectional shapes as those of the cells **14** described above. Of those, for example, a hexagon or a quadrangle is preferred, and a square, a rectangle, or a hexagon is more preferred. The sectional shapes and sizes of the gas flow passages **16** may be all the same, or may be at least partly different.

Through the cells **14** (more specifically, the gas flow passages **16**), the above-mentioned gas to be treated typically flows in the adsorption step. Further, in one embodiment, the desorption gas flows through the cells **14** (more specifically, the gas flow passages **16**) in the desorption step.

The acid gas adsorption layer **15** includes an acid gas adsorption material in accordance with the acid gas to be adsorbed. In one embodiment, the acid gas adsorption layers **15** are carbon dioxide adsorption layers **15a.** The carbon dioxide adsorption layers **15a** include a carbon dioxide adsorption material as an example of the acid gas adsorption material.

Any appropriate compound capable of adsorbing and desorbing CO₂ may be adopted as the carbon dioxide adsorption material. Examples of the carbon dioxide adsorption material include: nitrogen-containing compounds described later; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic flameworks (MOF), such as MOF-74, MOF-200, and MOF-210; zeolite; activated carbon; nitrogen-doped carbon; and ionic liquids. Those carbon dioxide adsorption materials may be used alone or in combination thereof.

Of the carbon dioxide adsorption materials, a nitrogen-containing compound and an ionic liquid are preferred. More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethylene amine compounds such as tetraethylenepentamine; amino silane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; an organic monomer having a primary amino group to tertiary amino group, such as ethyleneimine and styrene having imparted thereto an amino group; an organic polymer having a primary amino group to tertiary amino group, such as a linear polyethyleneimine and a branched polyethyleneimine having a primary amino group to tertiary amino group; piperazine compounds such as 1-(2-hydroxyethyl) piperazine; amide compounds such as a polyamidoamine; a polyvinylamine; and an organic/inorganic compound having imparted thereto an amino group as a substituent.

Of the nitrogen-containing compounds, methyldiethylamine, monoethanolamine, a cyclic amine, diethanolamine, tetraethylenepentamine, ethyleneimine, a linear polyethyleneimine, a branched polyethyleneimine, and an organic/inorganic compound having imparted thereto an amino group as a substituent are preferred.

The ionic liquid is a "salt" of a liquid formed only of an ion (an anion or a cation), and is in a liquid state under normal temperature and normal pressure (23°C, 0.1 MPaA (absolute pressure)). Examples of the cation of the ionic liquid include: an ammonium-based ion, such as an imidazolium salt or a pyridinium salt; a phosphonium-based ion; a sulfonium salt; and an inorganic ion. Examples of the anion of the ionic liquid include: a halogen-based ion, such as a bromide ion or a triflate ion; a boron-based ion such as a tetraphenylborate ion; a phosphorus-based ion such as a hexafluorophosphate ion; and a sulfur-based ion such as an alkyl sulfonate ion. Of those ionic liquids, for example, a combination of an imidazolium salt serving as a cation and a triflate ion serving as an anion is preferred.

The ionic liquid is used, more preferably, in combination with a carbon dioxide adsorption material other than the ionic liquid (hereinafter referred to as "another carbon dioxide adsorption material"). In this case, the ionic liquid coats another carbon dioxide adsorption material (for example, a nitrogen-containing compound). Thus, an improvement in performance of the carbon dioxide adsorption material and an increase in lifetime thereof can be achieved.

The content ratio of the ionic liquid is, for example, 0.000001 part by mass or more, preferably 0.00001 part by mass or more, and is, for example, 0.1 part by mass or less, preferably 0.05 part by mass or less with respect to 1 part by mass of the other carbon dioxide adsorption material. When the content ratio of the ionic liquid falls within the above-mentioned ranges, an improvement in performance of the carbon dioxide adsorption material and an increase in lifetime thereof can be stably achieved.

In one embodiment, the carbon dioxide adsorption layer **15a** further includes a porous carrier in addition to the above-mentioned carbon dioxide adsorption material. In this case, the carbon dioxide adsorption material is typically supported by the porous carrier to face the gas flow passage. When the carbon dioxide adsorption layer includes the porous carrier, the escape of the carbon dioxide adsorption material from the carbon dioxide adsorption layer can be prevented in the adsorption step and/or the desorption step.

The porous carrier may form mesopores in the carbon dioxide adsorption layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), PVDF, activated carbon, zeolite, mesoporous silica, and mesoporous alumina are preferred. Those porous carriers may be used alone or in combination thereof. A material different from that of the carbon dioxide absorption layer is preferably adopted for the porous carrier.

The BET specific surface area of the porous carrier is, for example, 50 m²/g or more, preferably 500 m²/g or more. When the surface area of the porous carrier is equal to or more than the above-mentioned lower limits, the carbon dioxide adsorption material can be stably supported, and hence an increase in CO₂ capture rate can be achieved. The upper limit of the BET specific surface area of the porous carrier is typically 2,000 m²/g or less.

When the carbon dioxide adsorption layer includes the carbon dioxide adsorption material and the porous carrier, the content ratio of the total of the carbon dioxide adsorption material and the porous carrier in the carbon dioxide adsorption layer is, for example, 30 mass% or more, preferably 50 mass% or more, and is, for example, 100 mass% or less, preferably 99 mass% or less.

The content ratio of the carbon dioxide adsorption material in the carbon dioxide adsorption layer is, for example, 30 mass% or more, preferably 50 mass% or more, and is, for example, 99 mass% or less. The content ratio of the porous carrier is, for example, 0.01 part by mass or more, preferably 0.3 part by mass or more, and is, for example, 0.7 part by mass or less, preferably 0.5 part by mass or less with respect to 1 part by mass of the carbon dioxide adsorption material. When the content ratio of the porous carrier falls within the above-mentioned ranges, the carbon dioxide adsorption material can be more stably supported.

Further, the carbon dioxide adsorption layer may be formed only of the carbon dioxide adsorption material. In this case, the carbon dioxide adsorption material is directly supported by the partition wall **13** to face the gas flow passage. When the carbon dioxide adsorption layer is formed only of the carbon dioxide adsorption material, the content ratio of the carbon dioxide adsorption material in the carbon dioxide adsorption layer is typically 95.0 mass% or more and 100 mass% or less. When the content ratio of the carbon dioxide adsorption material falls within the above-mentioned range, an excellent CO₂ capture rate can be stably ensured.

Such a carbon dioxide adsorption layer is typically produced by the following method. A solution of the carbon dioxide adsorption material is prepared by dissolving the above-mentioned acid gas adsorption material in a solvent. Further, the above-mentioned porous carrier is added to the solvent as required. The order of addition of the carbon dioxide adsorption material and the porous carrier is not limited to any particular order. After that, the solution of the carbon dioxide adsorption material is applied onto the base material (specifically, the partition walls), and the coating film is then dried, and is sintered as required. Thus, the carbon dioxide adsorption layer is formed.

Alternatively, a dispersion liquid including the carbon dioxide adsorption material except the ionic liquid and the porous carrier is applied onto the base material, and the coating film is then dried, and is sintered as required. After that, only the ionic liquid is applied to the base material. Thus, the carbon dioxide adsorption layer is formed.

Although not shown, the acid gas adsorption device **1** may include a heating member in addition to the base material **10** and the acid gas adsorption layers **15.** The heating member can heat the base material **10.** The heating member is typically in contact with the base material **10.** When the acid gas adsorption device includes the heating member, the temperature of the acid gas adsorption device can be smoothly raised to the desorption temperature in the desorption step.

Further, although not shown, the acid gas adsorption device **1** may include a case. The case has a tubular shape (hollow shape) extending in a direction of passage of the gas to be treated. Examples of the tubular shape include a cylindrical shape and a rectangular tubular shape. One end portion of the case is formed as an inflow port, and another end portion of the case is formed as an outflow port. The case houses the plurality of adsorption material layers **71** and the plurality of spacers **74** therein in one embodiment (see FIG. **2**), and houses the base material **10** and the acid gas adsorption layers **15** therein in another embodiment (see FIG. **3** and FIG. **4**).

### B-3. Acid Gas Supply Fan

As illustrated in FIG. **1****,** the acid gas supply fan **2** is configured to supply the gas to be treated (typically, a CO₂-containing gas) to the plurality of the acid gas adsorption devices **1** in the adsorption step. The acid gas supply fan **2** of the illustrated example can feed the gas to be treated containing the acid gas toward the plurality of acid gas adsorption devices **1.** Any appropriate configuration can be adopted for the acid gas supply fan **2.**

### B-4. Fluid Supply Line

The fluid supply line **3** typically includes a connecting portion **31,** the branching portion **32,** and the plurality of flow dividing portions **33.**

The connecting portion **31** is typically a pipe that connects the acid gas supply fan **2** and the branching portion **32** to each other.

The branching portion **32** is typically a manifold. Although not shown, the branching portion **32** has an inflow port and a plurality of outflow ports. The connecting portion **31** is connected to the inflow port. The number of outflow ports is the same as the number of acid gas adsorption devices **1** of the acid gas capture system **100.**

Each of the plurality of flow dividing portions **33** is typically a pipe that connects the branching portion **32** and each of the acid gas adsorption devices **1** to each other. In one embodiment, the flow dividing portion **33** connects the outflow port of the branching portion **32** and the inflow port of the case of the acid gas adsorption device **1.**

### B-5. Resistor

As described above, the resistor **5** is provided to the flow dividing portion **33.** The resistor **5** appropriately regulates a flow of the desorption gas through the flow dividing portion **33** in the desorption step. Any appropriate configuration can be adopted for the resistor **5** as long as the resistor **5** has the above-mentioned flow passage resistance. Examples of the resistor **5** include an orifice plate, a nonwoven fabric, a control valve, and a heat exchanger. The plurality of resistors **5** of the acid gas capture system **100** typically have substantially the same flow passage resistance (specifically, within a range of ±30% or ±5 kPaG (gauge pressure) with respect to a predetermined value) in each of the steps.

As described above, when the resistor **5** is configured to change the flow passage resistance, the acid gas capture system **100** may further include a control part **9.** The control part **9** can appropriately control the flow passage resistances of the resistors **5.** The control part **9** is typically connected to the plurality of resistors **5** so as to be communicable with each of the resistors **5.** The control part **9** can transmit a signal for instructing the resistor **5** to change the flow passage resistance. The control part **9** includes, for example, a central processing unit (CPU), a ROM, and a RAM.

### B-6. Desorption Gas Supply Unit

The desorption gas supply unit **6** is configured to supply the desorption gas to the acid gas adsorption device **1** in the desorption step. The desorption gas supply unit **6** of the illustrated example includes a desorption gas supply line **62** and an on-off valve **61.** The desorption gas supply line **62** is typically a pipe that allows the supply of the desorption gas to the fluid supply line **3.** A downstream end portion of the desorption gas supply line **62** in a direction of supply of the desorption gas is connected to the connecting portion **31.** When the desorption gas is a captured gas (described later), an upstream end portion of the desorption gas supply line **62** in the direction of supply of the desorption gas is connected to an intermediate tank that stores the desorption gas (typically, the captured gas), although not shown. The on-off valve **61** is provided to the desorption gas supply line **62,** and can open and close the desorption gas supply line **62.** Examples of the on-off valve **61** include a ball valve, a gate valve, and a butterfly valve. Preferably, the on-off valve **61** is a butterfly valve.

### B-7. Capture Unit

The capture unit **4** is configured to capture the acid gas that has been desorbed in the desorption step. The capture unit **4** of the illustrated example includes a suction pump **41** and a discharge line **42.** The suction pump **41** can suck the gas inside the acid gas adsorption device. The suction pump **41** is, for example, a vacuum pump. The discharge line **42** is typically a pipe through which the gas, which is discharged from the acid gas adsorption device **1** and flows toward the suction pump **41,** passes. An upstream end portion of the discharge line **42** in the direction of passage of the gas is branched into the same number of branch portions as the number of the acid gas adsorption devices **1,** which are connected to the acid gas adsorption devices **1,** respectively. In one embodiment, the upstream end portions (branch portions) of the discharge line **42** are connected to the outflow ports of the cases of the acid gas adsorption devices **1,** respectively. A downstream end portion of the discharge line **42** in the direction of passage of the gas is connected to the suction pump **41** after the above-mentioned branch portions are merged.

### B-8. Bypass Line

As illustrated in FIG. **5****,** the acid gas capture system **100** may further include the bypass lines **34.** The bypass line **34** is configured so that the gas to be treated bypasses the resistor **5** and is supplied to the acid gas adsorption device **1** in the adsorption step. The bypass line **34** is typically a pipe that allows passage of a gas. In one embodiment, the acid gas capture system **100** includes a plurality of bypass lines **34.** The plurality of bypass lines **34** are connected to the plurality of flow dividing portions **33,** respectively. An upstream end portion of the bypass line **34** in the direction of passage of the gas is connected to the flow dividing portion **33** at a position between the branching portion **32** and the resistor **5.** A downstream end portion of the bypass line **34** in the direction of passage of the gas is connected to the flow dividing portion **33** at a position between the resistor **5** and the acid gas adsorption device **1.**

In the illustrated example, an on-off valve **35** is provided to the bypass line **34.** The on-off valve **35** can open and close the bypass line **34.** Examples of the on-off valve **35** include a ball valve, a gate valve, and a butterfly valve. The on-off valve **35** is preferably a butterfly valve.

Such an on-off valve **35** may be electrically connected to the control part **9.** In this case, the control part **9** can control the opening and closing of the on-off valve **35** instead of controlling a change in the flow passage resistance of the resistor **5.**

### C. Operation of Acid Gas Capture System

Next, with reference to FIG. **1****,** description is given of an embodiment of a method of capturing an acid gas, which is performed in the acid gas capture system **100.** In one embodiment, the method of capturing an acid gas includes the above-mentioned adsorption step, a replacement step, and the above-mentioned desorption step in the stated order.

In the acid gas capture system **100,** the adsorption step is first performed. In the adsorption step, the on-off valve **61** is brought into a closed state, and the acid gas supply fan **2** is driven. As a result, the gas to be treated is fed by the acid gas supply fan **2,** and is distributed and supplied to the plurality of acid gas adsorption devices **1** through the fluid supply line **3.** The temperatures of the acid gas adsorption devices in the adsorption step have been adjusted in advance to the adsorption temperature. Further, the flow passage resistances of the resistors in the adsorption step are preferably set in advance to be equal to or less than the above-mentioned upper limit of the flow passage resistance of the resistor in the adsorption step. In the illustrated example, the flow passage resistances of the resistors **5** are set in advance as described above based on the signals from the control part 9.

The temperature of the gas to be treated that is supplied to the plurality of acid gas adsorption devices is, for example, 0°C or more and 50°C or less, preferably equal to the outside air temperature. The temperature of the gas to be treated may be the same as or different from the adsorption temperature of the acid gas adsorption device.

The pressure of the gas to be treated is, for example, 0.3×10⁵ PaA (absolute pressure) or more and 2.0×10⁵ PaA or less. The flow velocity of the gas to be treated fed by the acid gas supply fan is, for example, 1.0 m/sec or more and 30 m/sec or less, and the flow velocity of the gas to be treated that is supplied to each of the acid gas adsorption devices is, for example, 0.5 m/sec or more and 5 m/sec or less.

A temperature (adsorption temperature) of each of the acid gas adsorption devices in the adsorption step is, for example, 0°C or more, preferably 10°C or more, and is, for example, 50°C or less, preferably 40°C or less. In one embodiment, the adsorption temperature is equal to an outside air temperature. An operation time period of the adsorption step (adsorption time) is, for example, 15 minutes or more, preferably 30 minutes or more, and is, for example, 3 hours or less, preferably 2 hours or less.

When the adsorption temperature and/or the adsorption time falls within the above-mentioned ranges, the acid gas adsorption material can efficiently adsorb the acid gas.

Then, after the elapse of the above-mentioned adsorption time, the driving of the acid gas supply fan **2** is stopped to thereby complete the adsorption step.

An acid gas capture rate in the adsorption step (=100- (concentration of the acid gas in the gas to be treated having passed through the plurality of acid gas adsorption devices/concentration of the acid gas in the gas to be treated before being supplied to the plurality of acid gas adsorption devices×100)) is, for example, 60% or more, preferably 75% or more, more preferably 80% or more, and is, for example, 90% or less.

Next, in the acid gas capture system **100,** the replacement step is performed. In the replacement step, the on-off valve **61** is changed from the closed state into an open state, and the suction pump **40** is driven. Then, the desorption gas passes through the desorption gas supply line **62** to be supplied to the fluid supply line **3,** and is distributed and supplied to the plurality of acid gas adsorption devices **1** through the fluid supply line **3.** As a result, the gas to be treated is replaced by the desorption gas inside the acid gas adsorption devices **1** (typically, the gas flow passages **16**).

In the replacement step, the ranges of the temperature of the desorption gas to be supplied to each of the acid gas adsorption devices are the same as the above-mentioned ranges of the adsorption temperature. The pressure of the desorption gas is, for example, from 0.1×10⁴ PaA or more and 1.0×10⁴ PaA or less, or, for example, from 0.1×10⁴ PaA or more and 5.0×10⁴ PaA or less. The operation time period of the replacement step (hereinafter referred to as "replacement time") is, for example, 1 minute or more and 30 minutes or less.

In the replacement step, a purge gas different from the desorbed gas may be introduced into the acid gas adsorption device so that the gas to be treated is replaced by the purge gas in the acid gas adsorption device. In this case, the pressure of the purge gas is, for example, from 0.1×10⁴ PaA or more and 11×10⁴ PaA or less. The replacement time is, for example, 1 minute or more and 30 minutes or less. Examples of the purge gas include water vapor, carbon dioxide, nitrogen, and argon.

After that, the desorption step is performed subsequently to the replacement step in the acid gas capture system **100.**

In the desorption step, the plurality of acid gas adsorption devices **1** are typically heated to the desorption temperature exceeding the adsorption temperature. The heating of the acid gas adsorption devices may be started halfway through the replacement step.

Further, the flow passage resistances of the plurality of resistors are preferably set to be equal to or more than the above-mentioned lower limit of the flow passage resistance of the resistor in the desorption step. In the illustrated example, signals are transmitted from the control part **9** to the resistors **5,** and the flow passage resistances of the resistors **5** are changed as described above based on the signals. Next, the desorption gas is supplied to the plurality of acid gas adsorption devices **1** heated to the desorption temperature. More specifically, in the desorption step, the temperatures of the plurality of acid gas adsorption devices **1** are raised to the desorption temperature and maintained at the desorption temperature for predetermined desorption time, and the desorption gas is supplied to the acid gas adsorption devices. In the illustrated example, the driving of the suction pump **41** is maintained to evenly distribute and supply the desorption gas to the plurality of acid gas adsorption devices **1** through the fluid supply line **3** and the resistors **5.** As a result, the desorbed acid gas is captured together with the desorption gas. The gas captured in the desorption step may be referred to as "captured gas."

The desorption gas is preferably a captured gas that has previously been captured by the acid gas capture system. The use of the captured gas as the desorption gas enables achievement of an increase in concentration of the acid gas in the captured gas. The concentration of oxygen in the captured gas is preferably 15 vol% or less.

The temperature of the desorption gas supplied to the acid gas adsorption device is, for example, 60°C or more, preferably 90°C or more, and is, for example, 200°C or less, preferably 160°C or less.

The temperature of the acid gas adsorption device in the desorption step (desorption temperature) is, for example, 70°C or more, preferably 80°C or more, and is, for example, 200°C or less, preferably 110°C or less.

An operation time period of the desorption step (desorption time for which the acid gas adsorption device is maintained at the desorption temperature) is, for example, 1 minute or more, preferably 5 minutes or more, and is, for example, 1 hour or less, preferably 30 minutes or less. When the desorption temperature and/or the desorption time falls within the above-mentioned ranges, the acid gas can be more smoothly desorbed from the acid gas adsorption material.

As described above, when the temperature of each of the acid gas adsorption devices reaches the desorption temperature, the acid gas retained in the acid gas adsorption material starts being desorbed (released) from the acid gas adsorption material. The desorbed acid gas is discharged together with the desorption gas from the acid gas adsorption device **1,** passes through the discharge line **42** and the suction pump **41,** and is then stored in the intermediate tank as required. Such a captured gas is available for various purposes of uses, and may be supplied again to the acid gas adsorption device as the desorption gas as described above or may be used as a raw material of various kinds of industrial products (for example, a raw material of a hydrocarbon fuel).

After that, in the acid gas capture system **100,** the adsorption step is performed again as required. More specifically, after the driving of the suction pump **41** is stopped, the above-mentioned adsorption step is performed again. As described above, in the acid gas capture system **100,** the adsorption step, the replacement step, and the desorption step can be repeatedly performed in the stated order.

Further, when the acid gas capture system **100** includes the bypass lines **34** as illustrated in FIG. **5****,** the on-off valve **61** is brought into a closed state while the on-off valves **35** are brought into an open state, and the acid gas supply fan **2** is driven in the adsorption step. Then, the flow rate of the gas to be treated passing through the bypass lines **34** becomes larger than the flow rate of the gas to be treated passing through the flow dividing portions **33** due to the flow passage resistances of the resistors **5.** Thus, the above-mentioned gas to be treated passes through the bypass lines **34** to be smoothly supplied to the acid gas adsorption devices **1.**

Then, after elapse of the above-mentioned adsorption time, the driving of the acid gas supply fan **2** is stopped. Subsequently, the replacement step is performed. The state of the on-off valve **61** is changed from a closed state to an open state while the on-off valves **35** are maintained in an open state, and the suction pump **41** is driven. Then, the above-mentioned desorption gas passes through the bypass lines **34** to be supplied to the acid gas adsorption devices **1.** As a result, the gas to be treated is replaced by the desorption gas inside the acid gas adsorption devices **1** (typically, the gas flow passages **16**).

After elapse of the above-mentioned replacement time, the desorption step is performed. The states of the on-off valves **35** are changed from an open state to a closed state while the on-off valve **61** is maintained in an open state. As a result, the passage of the above-mentioned desorption gas through the bypass lines **34** is restricted. Thus, the desorption gas passes through the resistors **5** to be supplied to the acid gas adsorption devices **1** heated to the desorption temperature. Thus, the flow rates of the desorption gas flowing through the acid gas adsorption devices **1** can be made equal to each other, and the captured gas containing the acid gas and the desorption gas can be smoothly captured.

### Industrial Applicability

The acid gas capture system according to the embodiment of the present invention can be used for separation and capture of an acid gas, and particularly, can be suitably used for a Carbon dioxide Capture, Utilization and Storage (CCUS) cycle.

### Reference Signs List

- **1**: acid gas adsorption device

- **1a**: carbon dioxide adsorption device
- **3**: fluid supply line
- **32**: branching portion
- **33**: flow dividing portion
- **34**: bypass line
- **100**: acid gas capture system
- **100a**: carbon dioxide capture system

## Claims

1. An acid gas capture system, comprising:
a plurality of acid gas adsorption devices, each including an acid gas adsorption material; and
a fluid supply line configured to allow distribution and supply of a fluid to the plurality of acid gas adsorption devices,
wherein the fluid supply line includes:
a branching portion; and
a plurality of flow dividing portions connecting the branching portion and the plurality of acid gas adsorption devices to each other, respectively, and
wherein a resistor is provided to each of the plurality of flow dividing portions.

2. The acid gas capture system according to claim 1, wherein the acid gas is carbon dioxide.

3. The acid gas capture system according to claim 1 or 2,
wherein an adsorption step of causing an acid gas to be adsorbed to the acid gas adsorption materials by supplying a gas to be treated containing the acid gas to the plurality of acid gas adsorption devices; and a desorption step of causing the acid gas to be desorbed from the acid gas adsorption material by heating the plurality of acid gas adsorption devices, and supplying a desorption gas to the plurality of acid gas adsorption devices are practicable, and
wherein, in the desorption step, a flow passage resistance of each of the resistors is larger than a flow passage resistance of each of the plurality of acid gas adsorption devices.

4. The acid gas capture system according to claim 3,
wherein each of the resistors is configured to change the flow passage resistance, and
wherein, in the adsorption step, the flow passage resistance of each of the resistors is smaller than the flow passage resistance of each of the plurality of acid gas adsorption devices.

5. The acid gas capture system according to claim 4, further comprising a control part configured to control the flow passage resistances of the resistors.

6. The acid gas capture system according to claim 3, further comprising bypass lines, each of which is configured to enable the resistor to be bypassed.
